# FASCICULE DE BREVET EUROPEEN

(11) **EP 2 907 642 B1**
(45) Date de publication et mention de la délivrance du brevet: **06.07.2016**
(21) Numéro de dépôt: 15150869.4
(22) Date de dépôt: 13.01.2015
(51) Int. Cl.: B29C 35/08

(54) **Procédé et dispositif de consolidation et de mise en forme par induction d'une préforme en matériau composite**
Verfahren und Vorrichtung zur Konsolidierung und Formgebung durch Induktion eines Vorformlings aus Verbundmaterial
Method and device for consolidating and shaping a composite preform by induction

(30) Priorité: 18.02.2014 FR 1451292
(43) Date de publication de la demande: 19.08.2015
(73) Titulaire: AIRBUS OPERATIONS (S.A.S), 31060 Toulouse (FR)
(72) Inventeur: Collart, Cyrille, 44000 Nantes (FR); Chotard, Florian, 44300 Nantes (FR)

(56) Documents cités:
- EP-A2- 1 326 741
- FR-A1- 2 221 259
- US-A- 5 340 428

## Description

L'invention se rapporte à la fabrication de pièces en matériaux composites dans le domaine aéronautique. Elle concerne un procédé et un dispositif de consolidation et de mise en forme par induction d'une pièce en matériau composite.

Les pièces en matériaux composites sont fabriquées à partir d'une préforme comprenant généralement des fibres de carbone noyées dans une résine, qui sont déposées, par exemple par drapage, de manière à former des plis superposés les uns aux autres. Dans chaque pli, les fibres sont alignées selon une direction principale (0°, 45°, 90°). Les plans des plis de fibres de carbone sont parallèles les uns aux autres et définissent un plan dit plan principal. Par ailleurs, les procédés de fabrication d'une telle préforme génèrent des points de contact entre les plis dont la distribution est aléatoire et dépend fortement de la nature de la résine et de la vitesse de dépôt des fibres de carbone.

La consolidation d'une pièce en matériau composite est réalisée en chauffant la préforme préalablement obtenue jusqu'à une température provoquant le ramollissement de la structure de la préforme. Ainsi, la préforme ramollie va pouvoir être consolidée et, éventuellement, être conformée en une forme définie, par exemple au moyen d'un moule. Pour consolider la préforme, on utilise généralement des dispositifs de consolidation (ou de cuisson) par convection, par exemple un autoclave, dans lequel un chauffage est réalisé par transfert d'énergie thermique entre un fluide et la pièce à consolider. Cependant, le contrôle de la température de la pièce à consolider est délicat et ce mode de consolidation ne garantit pas l'uniformité de l'apport d'énergie et donc de la consolidation.

Le chauffage d'une préforme peut également être obtenu par induction en appliquant un champ magnétique autour de la préforme à consolider. Le document EP1326741B1 décrit une composition de matrice polymère comprenant des éléments ferromagnétiques dispersés dans une matrice polymère et un procédé permettant de générer un chauffage par hystérésis homogène dans ladite composition afin de contrôler précisément la température de consolidation de cette composition.

Par ailleurs, il est connu que sous l'effet d'un champ magnétique appliqué à une pièce, des courants induits circulent dans celle-ci et génèrent une élévation de température par un effet Joule lié à la résistance électrique du matériau dans lequel circulent ces courants.

Dans une préforme en matériau composite, les courants induits circulent selon deux directions :
- une direction principale, dans les plis, le long des fibres de carbone de la préforme, et
- une direction secondaire, perpendiculaire à la direction principale, entre les plis, le long de laquelle se positionnent les points de contact entre les plis.

La préforme subit donc un gradient de température, par exemple de la surface extérieure vers le centre de la pièce. Par conséquent, la consolidation n'est pas homogène dans toute la préforme et le temps de chauffage doit être suffisant pour assurer une température de consolidation correcte dans tout le volume de la préforme.

Ainsi, lors de la consolidation d'une préforme en matériau composite dont la résine contient des particules ferromagnétiques, telle que décrite dans le document EP1326741B1, les deux phénomènes de cuisson par induction, c'est-à-dire le chauffage par courant induits et le chauffage par hystérésis, coexistent.

Cependant, le chauffage par courant induits est prépondérant par rapport au chauffage par hystérésis, ce qui nuit à l'homogénéité de la cuisson. Par conséquent, les préformes comprenant des variations d'épaisseur ou ayant des formes complexes, ne peuvent être réalisées correctement avec ce type de dispositif de consolidation.

La présente invention a pour objet de remédier à tout ou partie de cet inconvénient. Elle concerne un procédé de consolidation et de mise en forme par induction d'une préforme en matériau composite comprenant des fibres de carbone noyées dans une résine et orientées selon une direction principale appartenant à un plan principal, ledit procédé comprenant les étapes suivantes :
a) préparation d'un mélange homogène comprenant la résine et au-moins un matériau ferromagnétique, présenté sous une forme de particules ;
b) formation d'une préforme en noyant les fibres de carbone dans le mélange ; et
c) chauffage par induction de la préforme jusqu'à une température définie, dite température de procédé, sensiblement égale à la température de

Curie du matériau ferromagnétique, par génération, au moyen d'un inducteur bifacial, d'un champ magnétique homogène dans la préforme selon une direction d'incidence.

Selon l'invention, ledit procédé est remarquable en ce qu'il comprend de plus, une étape d'inclinaison d'au moins l'un des éléments suivants : la préforme et l'inducteur bifacial, de manière à orienter la direction d'incidence du champ magnétique par rapport au plan principal selon un angle différent de 90° et différent d'un angle nul.

Ainsi, le procédé conforme à l'invention permet d'optimiser la prépondérance du chauffage par hystérésis sur le chauffage par courants induits, et donc de chauffer uniformément la préforme, autant sur la partie extérieure qu'au centre de la préforme en matériau composite composée de fibres de carbone noyées dans une résine comprenant des particules ferromagnétiques. La préforme est donc intégralement cuite à la même vitesse et en même temps, ce qui réduit le temps de cuisson. En outre, le procédé permet d'obtenir une précision accrue de la température que la pièce atteint lors de sa cuisson, car elle est sensiblement la même dans l'ensemble de la préforme.

La présente invention peut présenter différents modes de réalisation, qui peuvent être pris en combinaison ou séparément :
- le procédé comprend une étape d'application d'une pression de contact,
- le procédé comprend une étape consistant à positionner la préforme dans un moule,
- la température de procédé est définie entre une température de transformation de la résine et une température supérieure à cette température de transformation de la résine d'au moins 50°C,
- à l'étape de chauffage, la préforme est déplacée dans l'inducteur bifacial suivant une vitesse de déplacement, la durée de génération du champ magnétique dépendant de la vitesse de déplacement.

La présente invention se rapporte également à un dispositif de consolidation et de mise en forme par induction d'une préforme en matériau composite comprenant des fibres de carbone noyées dans une résine et orientées selon une direction principale appartenant à un plan principal, et comprenant également des particules de matériau ferromagnétique, le dispositif comportant au moins une unité de chauffage pourvue d'au moins un inducteur bifacial dont deux parois sont réparties de part et d'autre d'un support sur lequel est positionnée la préforme, le dispositif comportant, également, des moyens de génération et des moyens d'adaptation d'un courant alternatif, destinés en utilisation à générer un champ magnétique homogène selon une direction d'incidence entre les deux parois de l'inducteur bifacial, afin d'obtenir un chauffage par induction de la préforme jusqu'à une température définie, dite température de procédé, sensiblement égale à la température de Curie du matériau ferromagnétique.

Selon l'invention, ce dispositif comprend, de plus, des moyens d'inclinaison d'au moins l'un des éléments suivants : la préforme et l'inducteur bifacial, de manière à orienter la direction d'incidence du champ magnétique par rapport au plan principal selon un angle différent de 90° et différent d'un angle nul.

Selon différents modes de réalisation de l'invention, qui peuvent être pris en combinaison ou séparément :
- l'inducteur bifacial comprend deux bobines de Helmholtz comprenant au moins deux spires dont chacune correspond à une paroi de l'inducteur bifacial,
- l'inducteur bifacial comprend un nombre pair de spires réparties deux-à-deux de part et d'autre du support,
- ledit dispositif comprend un moule dans lequel est positionnée la préforme.

Les figures annexées feront bien comprendre comment l'invention peut être réalisée. Sur ces figures, des références identiques désignent des éléments semblables.

La figure 1 illustre schématiquement une vue en perspective d'un mode de réalisation particulier d'un dispositif de consolidation selon l'invention,

La figure 2 illustre schématiquement une vue de profil du dispositif de la figure 1,

La figure 3 est une vue détaillée en perspective d'un second mode de réalisation d'un dispositif, et

La figure 4 est une vue en perspective du mode de réalisation de la figure 3.

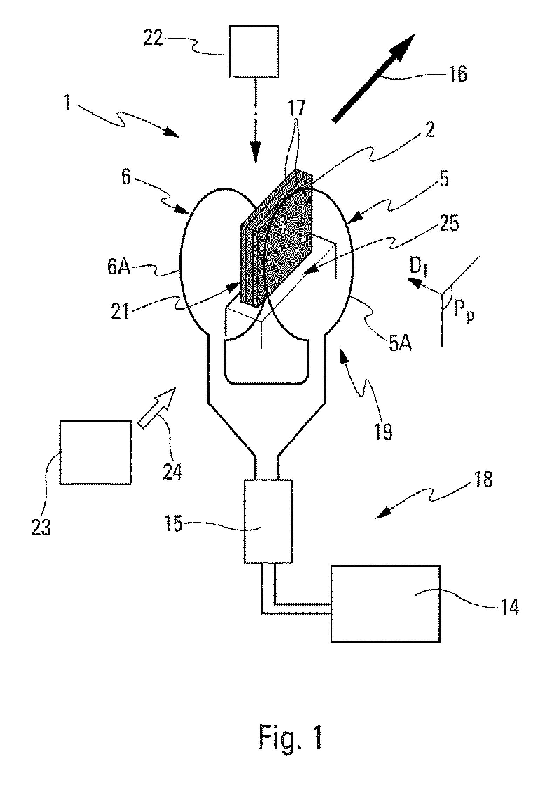

Le dispositif de consolidation 1, représenté sur les figures 1 à 4, est destiné à consolider une préforme 2, en matériau composite comprenant des fibres de carbone alignées selon une direction principale D_{P} et noyées dans une résine, les fibres formant des plis 17 parallèles à un plan principal P_{P}. Ce plan principal P_{P} est perpendiculaire à une direction secondaire Di, le long de laquelle peuvent se positionner des points de contact entre les plis 17 lors de la fabrication de la préforme 2.

La résine contient un absorbeur de champ comprenant un matériau ferromagnétique dont la perméabilité magnétique relative est plus élevée que la perméabilité magnétique de la résine utilisée et que celle du carbone des fibres (perméabilité magnétique relative µ < 2 T.m.A⁻¹), par exemple de la poudre de fer (perméabilité magnétique relative µ = 250 T.m.A⁻¹ et température de Curie = 770°). Le matériau ferromagnétique se présente sous forme de particules ferromagnétiques sphériques noyées dans la résine, par exemple du polysulfone (PSU), avec des fractions volumiques allant de 10% à 20%. Le diamètre des particules ferromagnétiques est compris entre 22 microns et 300 microns. L'homogénéité du mélange résine-particules est fonction du grade de la résine, de la granulométrie des particules de matériau ferromagnétique ainsi que de l'imprégnation entre la résine et les fibres de carbone (qualité de l'interface fibre/résine, viscosité de la résine, taux de porosité).

On choisit un matériau dont la température de Curie est sensiblement égale à une température définie, appelée "température de procédé", correspondant par exemple à la température de transformation de la résine augmentée d'une valeur de 0 à 50°C selon la géométrie de la préforme 2 et l'utilisation finale de la pièce composite. La température de Curie correspond à la température à laquelle le matériau ferromagnétique devient paramagnétique et perd, notamment, ses propriétés de conductions thermique et électrique. La température de transformation dépend de la nature de la résine et est, par exemple :
- soit la température de surfusion dans le cas où la résine de la préforme 2 à consolider est en matériau semi-cristallin ;
- soit la température de fusion (ou température de début de "ramollissement") dans le cas où la résine de la préforme 2 à consolider est en matériau amorphe ;
- soit la température de polymérisation dans le cas où la résine de la préforme 2 à consolider est en matériau thermodurcissable.

Par exemple, dans le cas de fibres de carbone noyées dans une résine de polyétheréthercétone (désigné par PEEK), le matériau ferromagnétique utilisé peut être du NiFe5.

Le dispositif de consolidation 1 comporte également une unité de chauffage 18. L'unité de chauffage 18 comprend un inducteur bifacial 19, un générateur 14 de courant électrique alternatif, et des moyens 15 d'adaptation de ce courant.

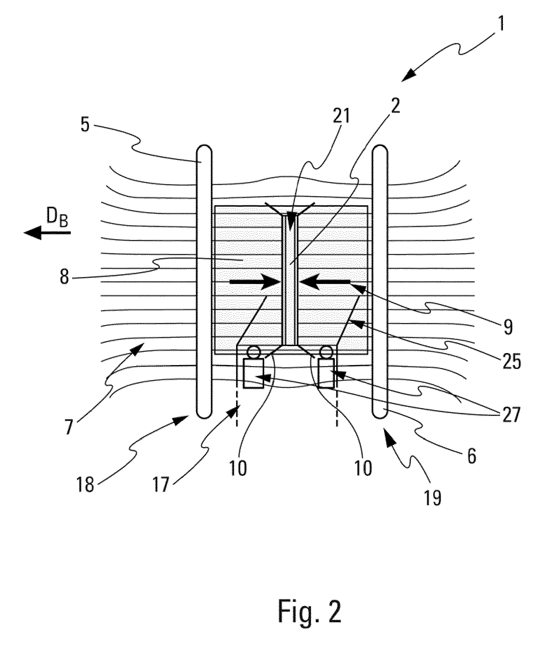

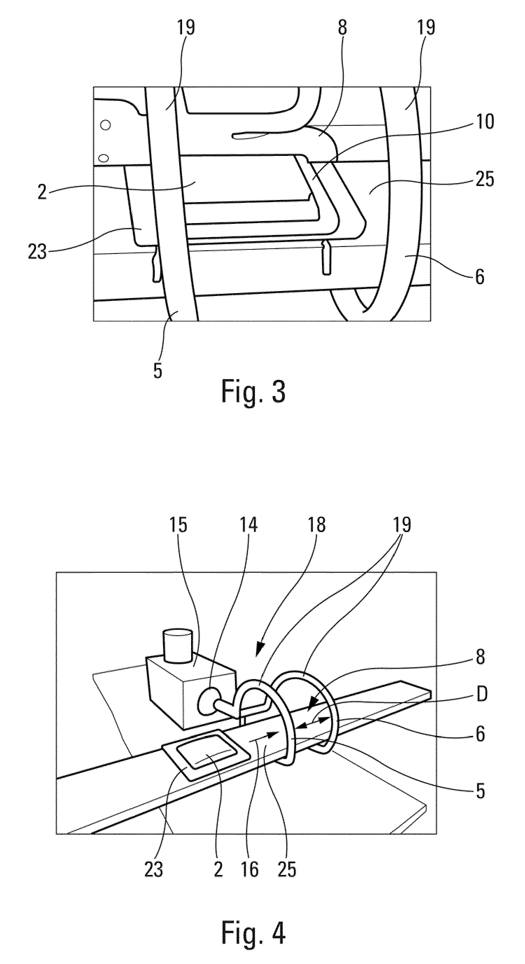

La préforme 2 est placée sur un support 25 dans la zone 8 entre deux parois 5 et 6 parallèles et espacées de l'inducteur bifacial 19. Une pression de contact 9 (illustrée par des flèches 9 sur la figure 2), est appliquée sur la préforme 2, par exemple, comme visible sur la figures 3 et 4, en recouvrant la préforme 2 d'une vessie 23 mise sous vide.

Préférentiellement, l'inducteur bifacial 19 comprend deux bobines de Helmholtz et les deux parois 5, 6 contiennent chacune une spire 5A, 6A. Les spires 5A, 6A présentent un même rayon. Elles sont agencées parallèlement l'une à l'autre et espacées l'une de l'autre d'une distance D égale à leur rayon, comme visible sur la figure 4.

L'application d'un courant électrique alternatif génère un champ magnétique 7 alternatif homogène entre les deux spires 5A, 6A. Le champ magnétique 7 est dirigé selon une direction d'incidence D_{B}, comme représenté sur la figure 2 par des lignes de champ 7 perpendiculaires au plan des spires 5A, 6A. Ainsi, l'inducteur bifacial 19 permet de générer un champ magnétique homogène sur une zone sensiblement circulaire 8.

Comme illustré sur la figure 2, le dispositif 1 comprend, de plus, des moyens d'inclinaison 27 du support 25 destinés à orienter la préforme 2. Par exemple, les moyens d'inclinaison 27 comprennent un ensemble d'au moins trois vérins pneumatiques situés sous des côtés du support 25. Ainsi, par un jeu de mouvements différents d'un vérin à l'autre, la préforme 2 peut être inclinée selon au moins trois axes afin que l'angle entre la direction d'incidence D_{B} du champ magnétique 7 et le plan principal P_{P} des plis des fibres de carbone, soit :
- différent de 90°, afin de limiter un chauffage par circulation de courants induits le long de la direction principale D_{P} des fibres de carbone ; et
- différent de 0°, afin de limiter un chauffage par circulation de courants induits, sur les points de contacts entre plis, le long de la direction secondaire Di. De préférence, l'angle est supérieur à 5°.

Dans un mode de réalisation préféré, le champ magnétique 7 a une fréquence élevée (de l'ordre de 1 MHz à 10 MHz) et la puissance du champ magnétique 7 est supérieure à 5 000 A/m. Ces paramètres inductifs initient un chauffage par hystérésis et limitent un chauffage par circulation de courants induits.

En présence d'un tel champ magnétique, les particules ferromagnétiques s'orientent selon la direction des lignes du champ 7. L'ordonnancement progressif des particules génère un chauffage par induction qui suit un cycle d'hystérésis et est appelé chauffage hystérésis. La température de la préforme 2 augmente jusqu'à ce que les particules ferromagnétiques perdent leur propriété d'aimantation spontanée, c'est-à-dire jusqu'à ce que la température de la préforme 2 soit égale à la température du Curie. L'homogénéité de la distribution des particules de matériau ferromagnétique garantit l'homogénéité du chauffage par induction généré dans la préforme 2. La géométrie de la préforme 2 à consolider n'a pas d'impact sur la distribution thermique au sein de la préforme 2.

Ce chauffage hystérésis est supplémentaire à celui généré par la circulation de courants induits le long des fibres de carbone du matériau composite. La fraction volumique de particules ferromagnétiques, les paramètres inductifs et l'inclinaison entre la préforme 2 et les parois 5, 6 de l'inducteur bifacial 19 maximisent le chauffage hystérésis et sa prépondérance sur le chauffage par circulation de courants induits et, lorsque la température de la pièce est égale à la température de Curie, le chauffage de la préforme est naturellement stoppé.

Ainsi, en choisissant un matériau ferromagnétique dont la température de Curie est égale à la température de procédé et en adaptant les paramètres inductifs tels que la fréquence du courant alternatif et la puissance injectée du générateur 14, le dispositif 1 permet de générer un chauffage homogène dans la préforme 2 à un niveau de température maîtrisé et reproductible permettant une consolidation homogène de la préforme 2.

Dans une variante de réalisation, représentée sur la figure 1, le dispositif 1 comprend, de plus, des moyens de refroidissement 23 comprenant un fluide, tel que de l'eau ou de l'air pulsé, et un ensemble de canalisations entourant la préforme 2 ou le moule 10, comme illustré sur la figure 1 par une flèche 24. Le refroidissement est atteint lorsque la température est redescendue en-dessous de la température de cristallisation de la résine.

Dans un mode de réalisation particulier, le dispositif 1 comprend de plus, des moyens de déplacement 22 du support 25, tels qu'une chenille associée à une roue d'entraînement, qui sont aptes à déplacer la préforme 2 entre les spires 5A et 6A, comme représenté par une flèche 16 sur les figure 1 et 4. La préforme 2 est soumise à une translation dans la zone 8 où le champ magnétique 7 est homogène. La vitesse de déplacement de la préforme 2 est contrôlée de sorte que le temps d'exposition au champ magnétique 7 (entre les spires 5A et 6A) est suffisant pour atteindre la température de transformation de la résine, et obtenir ainsi la consolidation de la préforme 2.

Dans ce mode de réalisation particulier, une ligne de production permet de consolider plusieurs préformes en les faisant circuler par les moyens de déplacement 22 sur le support 25 entre les deux spires 5A et 6A.

Dans un autre mode de réalisation particulier pour une mise en forme, la préforme 2 est positionnée dans un moule 10 et maintenue dans le moule 10 pendant la génération du champ magnétique 7 jusqu'à consolidation et formage de la pièce. Le moule 10 est par exemple maintenu sur la préforme 2 par une pression de contact 9, comme représenté schématiquement sur la figure 2.

Dans une variante de réalisation, la préforme 2 est positionnée dans le moule 10 dès l'installation dans le montage, puis elle est refroidie avant d'être démoulée. Par exemple, la préforme 2 est consolidée quinze minutes à la température de transformation de la résine, puis est refroidie jusqu'à 60°C pour être démoulée.

Dans une autre variante de réalisation, la préforme 2 est positionnée dans le moule 10 après la consolidation. Par exemple, la préforme 2 est consolidée quinze minutes à la température de transformation de la résine, puis est moulée pendant 60 à 90 secondes, en fonction notamment de l'épaisseur de la préforme 2.

Le champ magnétique 7 est généré pendant un temps défini afin de consolider et former la préforme 2 à la géométrie souhaitée de la pièce. Une fois que le champ magnétique 7 est arrêté, l'ensemble est maintenu grâce au moule 10 jusqu'à ce qu'il ait suffisamment refroidi et que la préforme 2 ait durci.

Bien entendu, la présente invention n'est pas limitée aux modes de réalisation décrits ci-dessus et peut s'étendre à toute variante présentant les caractéristiques précitées. Notamment, différents modes de réalisation peuvent être combinés. Ainsi, le dispositif 1 peut être utilisé pour réaliser la consolidation et le formage d'une pièce composite au cours d'une même étape de production.

De même, les moyens d'inclinaison 27 peuvent être appliqués à l'inducteur bifacial 19. Dans cette variante de réalisation (non représentée), les deux parois 5, 6 de l'inducteur bifacial 19 sont orientées alors que le support 25, sur lequel la préforme 2 est disposée, reste fixe. Dans une autre variante de réalisation (également non représentée), les moyens d'inclinaison 27 peuvent comporter des premiers éléments d'inclinaison appliqués à l'inducteur bifacial 19 et des seconds éléments d'inclinaison appliqués à l'ensemble 21.

Par ailleurs, le dispositif 1 n'est pas limité aux bobines de Helmholtz à deux spires. Le dispositif 1 peut être équipé d'un inducteur bifacial comportant un nombre pair de spires réparties deux à deux de part et d'autre du support 25. De même, l'inducteur peut être un dispositif circulaire ou sphérique entourant la préforme 2 à consolider et générant un champ magnétique homogène autour de la préforme 2. Dans de tels modes de réalisation, les moyens d'adaptation 15 du dispositif 1 sont configurés pour alimenter tout ou partie des spires de l'inducteur, les paramètres du champ magnétique 7 ainsi généré au sein de l'inducteur étant dépendants de la préforme à consolider et/ou à former.

## Revendications

1. Procédé de consolidation et de mise en forme par induction d'une préforme (2) en matériau composite comprenant des fibres de carbone noyées dans une résine et orientées selon une direction principale appartenant à un plan principal (P_{P}), ledit procédé comprenant les étapes suivantes :
- préparation d'un mélange homogène (21) comprenant la résine et au moins un matériau ferromagnétique, présenté sous une forme de particules ;
- formation de la préforme (2) en noyant les fibres de carbone dans le mélange (21) ; et
- chauffage par induction de la préforme (2) jusqu'à une température définie, dite température de procédé, sensiblement égale à la température de Curie du matériau ferromagnétique, par génération, au moyen d'un inducteur bifacial (19), d'un champ magnétique (7) homogène dans la préforme (2) selon une direction d'incidence (D_{B}),
**caractérisé en ce que** le procédé comprend de plus, une étape d'inclinaison d'au moins l'un des éléments suivants : la préforme (2) et l'inducteur bifacial (19), de manière à orienter la direction d'incidence (D_{B}) du champ magnétique (7) par rapport au plan principal (P_{P}) selon un angle différent de 90° et différent d'un angle nul.

2. Procédé selon la revendication 1,
**caractérisé en ce que** le procédé comprend une étape d'application d'une pression de contact (9).

3. Procédé selon l'une des revendications 1 et 2,
**caractérisé en ce que** le procédé comprend une étape consistant à positionner la préforme (2) dans un moule (10).

4. Procédé selon l'une quelconque des revendications précédentes, **caractérisé en ce que** la température de procédé est définie entre une température de transformation de la résine et une température supérieure à cette température de transformation de la résine d'au moins 50°C.

5. Procédé selon l'une quelconque des revendications précédentes, **caractérisé en ce qu'**à l'étape de chauffage, la préforme (2) est déplacée dans l'inducteur bifacial (19) suivant une vitesse de déplacement, la durée de génération du champ magnétique (7) dépendant de la vitesse de déplacement.

6. Dispositif (1) de consolidation et de mise en forme par induction d'une préforme (2) en matériau composite comprenant des fibres de carbone noyées dans une résine et orientées selon une direction principale appartenant à un plan principal (P_{P}), et comprenant également des particules de matériau ferromagnétique, le dispositif (1) comportant au moins une unité de chauffage (18) pourvu d'au moins un inducteur bifacial (19) dont deux parois (5,6) sont réparties de part et d'autre d'un support (25) sur lequel est positionnée la préforme (2), le dispositif (1) comportant, également, des moyens de génération (16) et des moyens d'adaptation (15) d'un courant alternatif destinés en utilisation à générer un champ magnétique (7) homogène selon une direction d'incidence (D_{B}), entre les deux parois de l'inducteur bifacial (19), afin d'obtenir un chauffage par induction de la préforme (2) jusqu'à une température définie, dite température de procédé, sensiblement égale à la température de Curie du matériau ferromagnétique, **caractérisé en ce que** le dispositif (1) comprend, de plus, des moyens d'inclinaison (27) d'au moins l'un des éléments suivants : la préforme (2) et l'inducteur bifacial (19), de manière à orienter la direction d'incidence (D_{B}) du champ magnétique (7) par rapport au plan principal (P_{P}) selon un angle différent de 90° et différent d'un angle nul.

7. Dispositif selon la revendication 6,
**caractérisé en ce que** l'inducteur bifacial (19) comprend deux bobines de Helmholtz comprenant au moins deux spires (5A, 6A) dont chacune correspond à une paroi (5, 6) de l'inducteur bifacial (19).

8. Dispositif selon la revendication 6,
**caractérisé en ce que** l'inducteur bifacial (19) comprend un nombre pair de spires (5A, 6A) réparties deux-à-deux de part et d'autre du support (25).

9. Dispositif selon l'une quelconque des revendications 6 à 8,
**caractérisé en ce qu'**il comprend un moule (10) dans lequel est positionnée la préforme (2).

## Patentansprüche

1. Verfahren zur Konsolidierung und Formgebung durch Induktion eines Vorformlings (2) aus Verbundmaterial, welches Kohlefasern aufweist, die in einem Harz eingebettet und gemäß einer Hauptrichtung ausgerichtet sind, welche einer Hauptebene (P_{P}) angehört, wobei das Verfahren die folgenden Schritte aufweist:
Vorbereiten eines homogenen Gemenges (21), welches das Harz und mindestens ein ferromagnetisches Material aufweist, welches in einer Form von Partikeln dargestellt ist;
Ausbilden des Vorformlings (2), indem die Kohlefasern in dem Gemenge (21) eingebettet werden; und
Erhitzen des Vorformlings (2) durch Induktion bis auf eine definierte Temperatur, so genannte Verfahrenstemperatur, welche im Wesentlichen gleich der Curie-Temperatur des ferromagnetischen Materials ist, durch Erzeugen eines homogenen Magnetfeldes (7) in dem Vorformling (2) gemäß einer Einfallsrichtung (D_{B}) mittels eines zweiseitigen Induktors (19),
**dadurch gekennzeichnet, dass** das Verfahren außerdem einen Schritt zum Neigung von mindestens einem der folgenden Elemente aufweist: der Vorformling (2) und der zweiseitige Induktor (19), um die Einfallsrichtung (D_{B}) des Magnetfeldes (7) in Bezug auf die Hauptebene (P_{P}) gemäß einem Winkel auszurichten, welcher verschieden von 90° und verschieden von einem Winkel von Null ist.

2. Verfahren nach Anspruch 1, **dadurch gekennzeichnet, dass** das Verfahren einen Schritt des Aufbringens eines Kontaktdrucks (9) aufweist.

3. Verfahren nach einem der Ansprüche 1 und 2, **dadurch gekennzeichnet, dass** das Verfahren einen Schritt aufweist, welcher darin besteht, den Vorformling (2) in einer Gießform (10) zu positionieren.

4. Verfahren nach einem der vorhergehenden Ansprüche, **dadurch gekennzeichnet, dass** die Verfahrenstemperatur zwischen einer Umformungstemperatur des Harzes und einer Temperatur festgelegt wird, welche über dieser Umformungstemperatur des Harzes von mindestens 50°C liegt.

5. Verfahren nach einem der vorhergehenden Ansprüche, **dadurch gekennzeichnet, dass** beim Schritt des Erhitzens, der Vorformling (2) gemäß einer Verlagerungsgeschwindigkeit in den zweiseitigen Induktor (19) verlagert wird, wobei die Dauer der Erzeugung des Magnetfeldes (7) von der Verlagerungsgeschwindigkeit abhängt.

6. Vorrichtung (1) zur Konsolidierung und Formgebung durch Induktion eines Vorformlings (2) aus Verbundmaterial, welches Kohlefasern aufweist, die in einem Harz eingebettet und gemäß einer Hauptrichtung ausgerichtet sind, welche einer Hauptebene (P_{P}) angehört, und welches auch Partikel aus ferromagnetischem Material aufweist, wobei die Vorrichtung (1) mindestens eine Heizeinheit (18) aufweist, welche mit mindestens einem zweiseitigen Induktor (19) versehen ist, dessen beiden Wände (5, 6) beiderseits eines Trägers (25) aufgeteilt sind, auf welchem der Vorformling (2) positioniert ist, wobei die Vorrichtung (1) auch Mittel zur Erzeugung (16) und Mittel zur Anpassung (15) eines Wechselstroms aufweist, welche dafür vorgesehen sind, bei Verwendung ein homogenes Magnetfeld (7) gemäß einer Einfallsrichtung (D_{B}) zwischen den beiden Wänden des zweiseitigen Induktors (19) zu erzeugen, um ein Erhitzen durch Induktion des Vorformlings (2) bis zu einer festgelegten Temperatur, so genannte Verfahrenstemperatur, zu erzielen, welche im Wesentlichen gleich der Curie-Temperatur des ferromagnetischen Materials ist, **dadurch gekennzeichnet, dass** die Vorrichtung (1) außerdem Mittel zum Neigen (27) von wenigstens einem der folgenden Elemente aufweist: der Vorformling (2) und der zweiseitige Induktor (19), um die Einfallsrichtung (D_{B}) des Magnetfeldes (7) in Bezug auf die Hauptebene (P_{P}) gemäß einem Winkel auszurichten, welcher verschieden von 90° und verschieden von einem Winkel von Null ist.

7. Vorrichtung nach Anspruch 6, **dadurch gekennzeichnet, dass** der zweiseitige Induktor (19) zwei Helmholtz-Spulen aufweist, welche mindestens zwei Windungen (5A, 6A) aufweisen, die jeweils einer Wand (5, 6) des zweiseitigen Induktors (19) entsprechen.

8. Vorrichtung nach Anspruch 6, **dadurch gekennzeichnet, dass** der zweiseitige Induktor (19) eine geradzahlige Anzahl von Windungen (5A, 6A) aufweist, welche paarweise beiderseits des Trägers (25) aufgeteilt sind.

9. Vorrichtung nach einem der Ansprüche 6 bis 8, **dadurch gekennzeichnet, dass** sie eine Gießform (10) aufweist, in welcher der Vorformling (2) positioniert ist.

## Claims

1. Process for the consolidation and induction forming of a preform (2) made of a composite material comprising carbon fibers embedded in a resin which are oriented in a main direction belonging to a principal place (P_{P}), said process comprising the following stages:
- preparation of a uniform mixture (21) comprising the resin and at least one ferromagnetic material presented in the form of particles;
- formation of a preform (2) by embedding the carbon fibers in the mixture (21); and
- induction heating of the preform (2) up to a defined temperature referred to as the process temperature, said temperature being substantially equal to the Curie temperature of the ferromagnetic material, through generation by means of a two-sided inductor (19) of a uniform magnetic field (7) in the preform (2) in a direction of incidence (D_{B}),
**characterized in that** the process further comprises a tilting stage of at least one of the following elements: the preform (2) and the two-sided inductor (19), so as to orient the direction of incidence (D_{B}) of the magnetic field (7) in relation to the principal place (P_{P}) at an angle other than 90° and other than zero.

2. Process according to Claim 1,
**characterized in that** the process comprises an application stage of a contact pressure (9).

3. Process according to one of Claims 1 and 2, **characterized in that** the process comprises a stage involving positioning the preform (2) in a mold (10).

4. Process according to any one of the preceding claims, **characterized in that** the process temperature is defined between a transformation temperature of the resin and a temperature above this resin transformation temperature of at least 50°C.

5. Process according to any one of the preceding claims, **characterized in that** at the heating stage the preform (2) is moved in the two-sided inductor (19) at a displacement speed, the generation time of the magnetic field (7) depending on the displacement speed.

6. Device (1) for the consolidation and induction forming of a preform (2) made of composite material comprising carbon fibers embedded in a resin and oriented in a main direction belonging to a principal place (P_{P}) and likewise comprising particles of ferromagnetic material, the device (1) comprising at least one heating unit (18) provided with at least one two-sided inductor (19), two walls (5, 6) of which are distributed on both sides of a support (25) on which the preform (2) is positioned, the device (1) likewise comprising means of generating (16) and means of adapting (15) an alternating current, said means being intended for use in generating a uniform magnetic field (7) in a direction of incidence (D_{B}) between the two walls of the two-sided inductor (19), in order to achieve induction heating of the preform (2) up to a defined temperature referred to as the process temperature, said temperature being substantially equal to the Curie temperature of the ferromagnetic material, **characterized in that** the device (1) further comprises means of tilting (27) at least one of the following elements: the preform (2) and the two-sided inductor (19), so as to orient the direction of incidence (D_{B}) of the magnetic field (7) in relation to the principal place (P_{P}) at an angle other than 90° and other than zero.

7. Device according to Claim 6,
**characterized in that** the two-sided inductor (19) comprises two Helmholtz coils comprising at least two loops (5A, 6A), each of which corresponds to a wall (5, 6) of the two-sided inductor (19).

8. Device according to Claim 6,
**characterized in that** the two-sided inductor (19) comprises an even number of loops (5A, 6A) distributed in pairs on both sides of the support (25).

9. Device according to any one of Claims 6 to 8, **characterized in that** it comprises a mold (10) in which the preform (2) is positioned.
